# EUROPÄISCHE PATENTSCHRIFT

(11) **EP 3 367 845 B1**
(45) Veröffentlichungstag und Bekanntmachung des Hinweises auf die Patenterteilung: **28.08.2019**
(21) Anmeldenummer: 16798380.8
(22) Anmeldetag: 12.10.2016
(51) Int. Cl.: A47C 7/40

(54) **PHORONOMISCHE RÜCKENLEHNE FÜR EINEN STUHL ODER SITZ**
PHORONOMIC BACKREST FOR A CHAIR OR SEAT
DOSSIER PHORONOMIQUE POUR UNE CHAISE OU UN SIEGE

(30) Priorität: 28.10.2015 CH 15752015
(43) Veröffentlichungstag der Anmeldung: 05.09.2018
(73) Patentinhaber: III Solutions GmbH, 6340 Baar (CH)
(72) Erfinder: REINHARD, Andreas, 6340 Baar (CH)
(74) Vertreter: EGLI-EUROPEAN PATENT ATTORNEYS
(86) Internationale Anmeldenummer: PCT/CH2016/000133
(87) Internationale Veröffentlichungsnummer: WO 2017/070802

(56) Entgegenhaltungen:
- EP-A1- 2 110 052
- WO-A1-2016/067219
- US-A1- 2004 183 348
- US-A1- 2014 159 450

## Beschreibung

Die vorliegende Erfindung betrifft eine Rückenlehne, anzubauen an einem Stuhl oder Sitz, und die einen wesentlich verbesserten Sitzkomfort bietet, insbesondere für andauernde Sitzperioden, indem sie in der Rückenmuskulatur der sitzenden Person mittels funktioneller und anwenderdefinierter phoronomischer Elemente unterschwellige Bewegungen auslöst. Sie passt sich perfekt an den Rücken der sitzenden Person an und durch deren Bewegungen werden unterschwellige Stützbewegungen im Rückenbereich ausgelöst, was sich auch auf die restlichen Körperteile auswirkt. Die Phoronomie bedeutet: Bewegung eines Objektes ist die Veränderung der äusseren Verhältnisse desselben zu einem gegebenen Raum, nach Immanuel Kant. Die Bewegung des Raumes, zum Unterschied der Bewegung eines Körpers, ist bloss phoronomisch, das heisst sie hat selbst keine bewegende Kraft.

Angesichts der Tatsache, dass das Sitzen für den Menschen, namentlich für den berufstätigen Menschen, eine verhältnismässig neuzeitliche Erscheinung ist und im Prinzip erst mit dem Aufkommen der Dienstleistungsgesellschaft und der Einführung der Computer eine Breitenwirkung bekam, erhält das Sitzen als Körperhaltung eine erhöhte Bedeutung und wirkt sich durch die sehr hohe Zahl von Menschen, die heutzutage ihre Arbeitstage sitzend verbringen, entsprechend auf die Volksgesundheit aus. In Deutschland zählt man auf die ca. 80 Mio. Einwohner insgesamt 4 Milliarden Stühle, das heisst es kommen auf einen Einwohner ca. 50 Stühle. Der Stuhl als Produkt erweist sich daher als wichtiges und jedem Menschen vertrautes Objekt, und allein durch seinen sehr aussergewöhnlich umfangreichen Gebrauch begründet sollte er ein Maximum an Komfort und Unterstützung des Wohlbefindens und der körperlichen Gesundheit bieten.

Der Stand der Technik erfasst eine Vielzahl von Bürostuhl-Konstruktionen mit unterschiedlichsten Rückenlehnen-Konstruktionen, die allesamt anstreben, die erwünschten Ziele zu erfüllen, nämlich eine variable Verstellung der Stuhlelemente zur Anpassung an verschiedenste Körper, eine gesunde Körperhaltung, eine gute Durchblutung des Gesäss und ein ermüdungsfreies Sitzen zu ermöglichen. Der typische Bürostuhl weist ein Fahrwerk mit mehreren Beinen oder einem horizontalen Ring auf, an dem freigelenkte Rollen montiert sind, sodass sich der Stuhl prinzipiell in allen Richtungen rollen lässt. Weiter weist der typische Bürostuhl eine stabile Sitzfläche und eine in sich meist steife Rückenlehne auf. Die Sitzfläche ist um eine Vertikalachse auf dem Fahrwerk drehbar sowie in der Höhe verstellbar, jedoch in sich stationär, wie auch die Rücklehne. Diese ist in der Höhe und im Neigungswinkel verstellbar und meist auch nach hinten federgestützt schwenkbar. Man sitzt auf einem solchen Stuhl aber wie ein Mehlsack, der auf dem Boden steht und an eine Wand anlehnt. Das Gesäss und der Rücken werden kaum bewegt, was der Durchblutung und dem Wohlbefinden abträglich ist.

Ein ergonomischeres Bürostuhlmodell ist beispielsweise in DE 10 2005 033052 offenbart. Es zeigt ein Sitzmöbel, dessen Sitzfläche auf einer Kippeinrichtung liegt. Dieser Kippeinrichtung ist eine Arretierungseinrichtung in Form eines Ringschlauch-Luftkissens zugeordnet, dergestalt, dass sich über das Luftkissen die Kippwinkel der Kippbewegungen einstellen lassen. Eine mögliche Ausführung betrifft mehrere Luftkissen, welche individuell aufpumpbar sind, zum Zweck der gezielten Deaktivierung der Kippbewegungen.

Ähnliches ist aus einer Sitzvorrichtung aus US 2008 0079301 bekannt. Gezeigt wird eine Vorrichtung zur Steigerung der Wahrnehmung von Körperbewegungen sowie der Gesundheit. Die Methodik dieses Systems ist in ihrem Kern identisch mit derjenigen aus **[0004].**

Eine interessante Konstruktion zeigt die DE 20 2008 006 781 U1, indem dort ein oder mehrere Finray-Elemente verbaut sind, die sich in Längsrichtung der Rückenlehne erstrecken. Finray-Element bestehen aus zwei übereinander angeordneten, bandartigen Streifen aus biegsamem Material, wobei die Enden der Streifen miteinander fest verbunden sind, oder je stationär an einem Trägerelement befestigt sind. Diese beiden Streifen sind über schwenkbar oder biegsam an den Innenseiten der Steifen befestigte Stege miteinander verbunden, wobei diese Stege orthogonal oder schiefwinklig zu den Streifen an denselben befestigt sein können. In diesem Zusammenhang sei auch auf die EP 2 110 052 A1 sowie auf die WO 02/071900 verwiesen. Die EP 2 110 052 A1 offenbart eine elastisch verformbare Rückenschale mit Rippen, die in Querrichtung seitlich von einem Mittelteil abstehen und durch seitliche Einschnitte voneinander getrennt sind. Im Mittelteil sind zudem längliche Öffnungen ausgebildet, die in Querrichtung verlaufen und an beiden Enden zwischen den Enden von zwei in Längsrichtung benachbarten seitlichen Einschnitten enden. Die WO 02/071900 betrifft ein Stuhlrückenkernstück, dessen oberer Teil gegen Biegen widerstandsfähiger ist als dessen unterer Teil. Dieses Kernstück besitzt einen mittleren Bereich, der die Wirbelsäule begleitet und um eine horizontale Achse biegbar ist, und weist seitlich von diesem abstehende Rippen auf, die durch balgartige Verbindungen verbunden oder durch Schlitze getrennt sind.

Die Aufgabe der vorliegenden Erfindung ist es, ausgehend von diesem Stand der Technik, eine Rückenlehne für einen Stuhl oder Sitz dahingehend weiterzuentwickeln, dass sie unterschwellige Bewegungen der an ihr anlehnenden sitzenden Person auslöst, ohne dass diese notwendigerweise diese Bewegungen unmittelbar wahrnimmt. Die Bewegungen sollen am Stuhl durch denselben induzierte Bewegungen beantwortet werden. Diese Rückenlehne bringt das Sitzen auf eine neue Stufe und soll vom inaktiven Sitzen wegführen zu einem dynamischen, anregenden und die Durchblutung des Rückens stimulierenden Sitzens. Der Rücken soll besser gestützt und gleichzeitig bewegt werden. Seine Bewegungen wirken sich auch auf das Gesäss und die Oberschenkel aus.

Diese Aufgabe wird gelöst von einer Rückenlehne für einen Stuhl oder Sitz zur Anregung von unterschwelligen Bewegungen in der Rückenmuskulatur, die sich dadurch auszeichnet, dass die Rückenlehne aus einem zentralen phoronomischen Element aus zwei Säulenbändern besteht, die sich ab der Mitte des hinteren Endes der Sitzfläche nach oben erstrecken, und einer Anzahl beidseits wie Rippen ab dem zentralen phoronomischen Element seitlich abstehender phoronomischer Elemente aus je zwei Querbändern zur Abstützung der Rückenmuskulatur der sitzenden Person durch die vorderen Querbänder beidseits ihrer Wirbelsäule, wobei die Rückenlehne aus einem zentralen phoronomischen Element, besteht, das sich ab der Mitte des hinteren Endes der Sitzfläche nach oben erstreckt, wobei es nach hinten mit einstellbarem Widerstand nachgiebig neigbar ausgeführt ist, und wobei sein vorderes Säulenband dem Verlauf einer Wirbelsäule nachführbar biegbar ist, indem die Verbindungsstege zum hinteren Säulenband längsveränderlich, oder gelenkig verstellbar oder ihre Anlenkung an den einander gegenüberliegenden Innenseiten der Säulenbänder an den Säulenbändern längsverschieblich ausgeführt sind, sodass diese den Abstand der Säulenbänder in entspannter Lage definieren und bei lokalem Druck auf das vordere Säulenband dieses sich in Form und Länge nach Massgabe der Anordnung und Ausgestaltung der Verbindungsstege verändert, und wobei ab dem vorderen Säulenband beidseits mehrere Querbänder wie Rippen zur Abstützung der Rückenpartien beidseits der Wirbelsäule der sitzenden Person angeformt sind, die über Verbindungsstege je mit hinteren Querbändern verbunden sind, die ihrerseits am vorderen oder hinteren Säulenband angeformt sind, und wobei auch diese Verbindungsstege längsveränderlich, oder gelenkig verstellbar oder ihre Anlenkungen an den Querbändern an denselben längsverschieblich ausgeführt sind, sodass diese Verbindungsstege den Abstand der Querbänder in entspannter Lage definieren und bei lokalem Druck auf die vorderen Querbänder diese sich in Form und Länge nach Massgabe der Anordnung und Ausgestaltung der Verbindungsstege verändern.

In den Figuren wird ein Stuhl oder Sitz mit einer derartigen Rücklehne aus phoronomischen Elementen gezeigt und seine Konstruktion und seine Funktion wird in der nachfolgenden Beschreibung erläutert und erklärt.

Es zeigt
- Figur 1 :: Den Stuhl in einer Seitenansicht dargestellt, mit der Rückenlehnen aus einem zentralen phoronomischen Elemente wie den seitlich abzweigenden phoronomischen Elementen;
- Figur 2 :: Eine perspektivische Ansicht der Rückenlehne des Stuhls aus phonoromischen Elementen, von schräg oben her auf die Rückseite hin gesehen;
- Figur 3 :: Eine perspektivische Ansicht einer einfachen aber sehr wirkungsvollen Rückenlehne aus phonoromischen Elementen, von schräg oben her auf die Rückseite hin gesehen;
- Figur 4 :: Eine Darstellung der Sitzfläche eines Stuhl oder Sitzes mit phoronomischen Elementen.

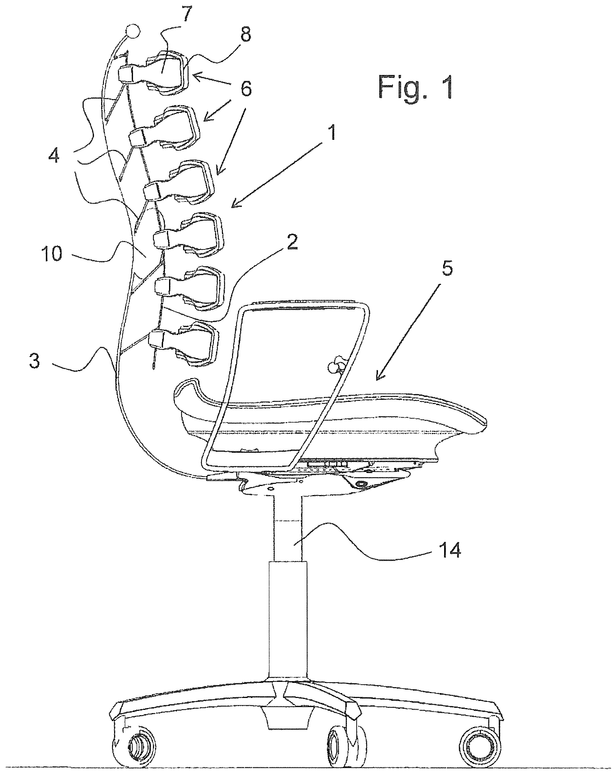

Ein Bürostuhl zur Anregung von unterschwelligen Bewegungen der Rückenmuskulatur ist in Figur 1 in einer Ansicht von der Seite her gesehen dargestellt. Das Fahrgestell, die Stütze 14 und die Sitzfläche 5 sind hier in konventioneller Weise gebaut, und das Spezielle des Stuhls besteht in seiner Rückenlehne und ihrer Konstruktion aus phoronomischen Elementen, zur Induktion unterschwelliger Bewegungen. Hierzu erstreckt sich ein solches phoronomisches Element 1 als Rückenlehne hinter der Sitzfläche 5 vertikal nach aufwärts, längs der Wirbelsäule einer auf der Sitzfläche 5 des Stuhls sitzenden Person, aber stets mit einem Abstand zur Wirbelsäule. Das phoronomische Element 1 besteht aus zwei Säulenbändern 2,3, wobei jedes dieser Säulenbänder ein flächiges, elastisch verformbares Band ist, zum Beispiel aus Kunststoff, aus Holz oder einem Metallblech gefertigt. Das hintere Säulenband 3 ist unterhalb der Sitzfläche 5 befestigt und verläuft von hier mit einer seitlichen Kontur, welche der Kontur des Gesässes und des Rückens einer sitzenden Person nachempfunden ist, zunächst nach hinten und dann nach oben. Es kann indessen an seinem Befestigungspunkt unterhalb der Sitzfläche in seiner Neigung erstellt werden.

Diese beiden Säulenbänder 2,3 sind an mehreren Stellen mit Verbindungsstegen 4 miteinander verbunden. Diese Verbindungsstege 4 sind hier steife flächige Elemente, die beidenends gelenkig mit der Innenseite der Säulenbänder 2,3 verbunden sind, aber wie man erkennt schiefwinklig zu denselben verlaufend angeordnet sind. Wirkt von der Sitzflächenseite her Druck auf das vordere Säulenband 2, so wird der Abstand zum hinteren Säulenband 3 verringert und gleichzeitig bewegt sich das vordere Säulenband 2 aufgrund der Geometrie der Anordnung der Verbindungsstege 4 relativ zum hinteren Säulenband 3 leicht nach aufwärts. Jedes Mal, wenn also Benutzer des Stuhles an die Rückenlehne anlehnt, bewegt sich die Auflagefläche für seinen Rücken etwas nach oben und massiert somit seine Rückenmuskulatur. Zwischen zwei Verbindungsstegen 4 ist hier ein Luftkissen 10 eingebaut, welches als progressive Druckfeder wirkt. Damit wird beim Entlasten der Rückenlehne diese wieder in ihren Ausgangszustand zurückversetzt. Vom Luftkissen 10 kann ein Luftschlauch an eine Anschluss-Stelle führen, die mit einem Ventil ausgerüstet ist, sodass es mittels einer Pumpe mit einem individuell wählbaren Druck aufpumpbar ist und Luft über das Ventil ablassbar ist, zur individuellen Formgebung der Säulenbänder 2,3. Es können selbstverständlich auch mehrere solche separaten Luftkissen zwischen den Verbindungsstegen 4 eingebaut sein. Durch Variation der Länge der Verbindungsstege, deren Anordnung und der Anzahl und des Fülldrucks der einzelnen Luftkissen kann die Kontur des vorderen Säulenbandes 2 an eine bestimmten Rückenkontur eines Benützers angepasst werden. Alternativ kann zwischen dem vorderen Säulenband 2 und dem hinteren Säulenband 3 mindestens eine Stahl-Druckfeder eingebaut sein, oder eben auch mehrere.

Am hier vorderen Säulenband 2 zweigen quer zu diesem Säulenband 2 mehrere Querbänder 6 wie Rippen vom zentralen phoronomischen Element 1 auf beide Seiten hin ab. Diese Querbänder 6 sind ebenfalls phoronomische Elemente 6 und bestehen je aus einem vorderen Querband 7 und einem hinteren Querband 8. Diese beiden Querbänder 7,8 sind an ihrem äusseren Ende in eine gemeinsame Spitze auslaufend und dort miteinander verbunden bzw. sie bilden je ein einstückiges Teil. Auf der gegenüberliegenden, inneren Seite sind sie am vorderen Säulenband 2 des zentralen phoronomischen Elementes 1 befestigt.

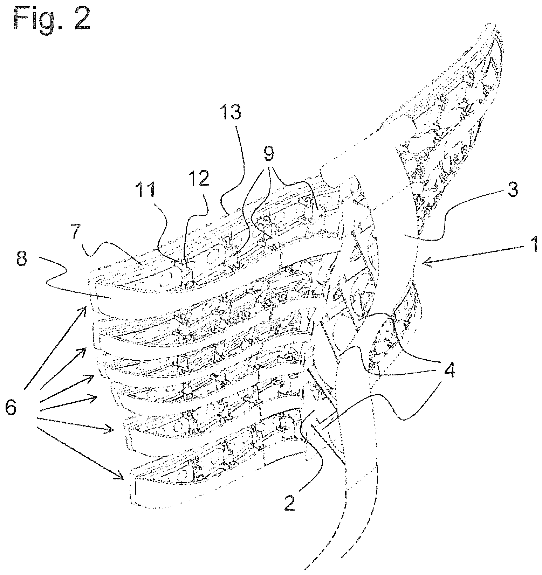

Die besondere Konstruktion dieser Rückenlehne geht aus der Figur 2 hervor, welche eine spezifische Ausführungsvariante im Detail offenbart. Die Rückenlehne ist dabei in einer perspektivischen Ansicht von schräg oben her auf die Rückseite hin gesehen dargestellt. Man erkennt das zentrale phoronomische Element 1, bestehend aus dem vorderen Säulenband 2 und dem hinteren Säulenband 3, das allerdings unten wie strichliniert angezeigt ist noch weiterführt, wie in Figur 1 ersichtlich. Diese beiden Säulenbänder 2 und 3 sind mit Verbindungsstegen 4 miteinander verbunden. Diese Verbindungsstege 4 werden hier von flächigen, steifen Elementen gebildet, zur Gewichtseinsparung je mit einem zentralen Loch versehen. Beidenends sind diese Verbindungsstege 4 gelenkig mit der Innenseite des vorderen Säulenbandes 2 bzw. des hinteren Säulenbandes 3 verbunden. Es ist somit sofort einleuchtend, dass ein Druck von vorne auf das vordere Säulenband 2 den Abstand zum hinteren Säulenband 3 verringert, und aufgrund der Geometrie der Anordnung der Verbindungsstege 4 das vordere Säulenband 2 sich ein wenig nach aufwärts bewegt, sich also zum hinteren, fest am Stuhl montierten Säulenband 3 relativ nach oben verschiebt. Am vorderen Säulenband 2 sind die seitwärts quer wie Rippen abzweigenden phoronomischen Elemente 6 angebaut. Diese bilden die eigentliche Auflagefläche der Rückenlehne. Wenn sich das vordere Säulenband 2 relativ zum hinteren Säulenband 3 auf- und abwärts bewegt, so auch die quer abstehenden Rippen, sodass also die gesamte Auflagefläche für den Rücken der auf dem Stuhl sitzenden Person leicht auf- und abwärts bewegt wird, und insbesondere jedes Mal, wenn die Person neu an die Rückenlehne anlehnt, diese etwas nach oben ausweicht. Das Mass dieser Aufwärtsbewegung ist abhängig vom Auflagedruck und der Dimensionierung und geometrischen Anordnung der Verbindungsstege 4 zwischen dem vorderen Säulenband 2 und dem hinteren Säulenband 3. Die Rippen sind indessen ebenfalls als phoronomische Elemente 6 ausgeführt. Sie sind je von einem vorderen Querband 7 und einem hinteren Querband 8 gebildet. Diese beiden Querbänder 7,8 sind mit mehreren Verbindungsstegen 9 verbunden. Diese bestehen im gezeigten Beispiel aus elastisch biegsamen, je ein S formenden Verbindungsstegen 9, die mit beiden Enden gelenkig an den Innenseiten der Querbänder 7,8 befestigt sind. Das ist vorliegend so realisiert, dass diese Verbindungsstege 9 an ihren Enden quer abstehende Bolzen 32 aufweisen, die in zugehörige Bolzenfassungen 11 einklickbar sind. Diese Fassungen 11 bilden zwei annähernd halbkreisförmige Bolzenfassungen und diese sind elastisch voneinander wegspreizbar, sodass die Bolzen 12 der Verbindungsstege 9 in diese Fassungen 11 einklickbar sind und hernach in den Fassungen 11 hin und her schwenkbar sind. Damit können die Verbindungsstege 9 leicht durch andere ausgetauscht werden. Das Entfernen und Einsetzen kann werkzeuglos und rasch erfolgen.

Die Gelenkverbindungen der Verbindungsstege 4,9 können an wenigstens einer oder auch an beiden Befestigungsseiten der Verbindungsstege gegenüber dem Säulenband 2,3 oder Querband 7,8 in Bandrichtung verschiebbar ausgeführt sein. Zum Beispiel können die Bolzenfassungen 11 längsverschiebbar an den Innenseiten der Querbänder 7,8 geführt sein. Diese Verschiebung kann mittels Bowdenzügen verstellbar sein, wobei Drahtseilzüge gegen um eine Umlenkrolle in den Endbereichen der Querbänder 7,8 geführt sind und die Bolzenfassungen 11 mitnehmen. Die Bowdenzüge werden über Umlenkrollen im Innern der Rückenlehnenkonstruktion zu einem in sitzender Position gut Verstellrad geführt, welches in verschiedene Drehstellungen bringbar ist und in jeder Stellung arretierbar ist.

Die vorderen Querbänder 7 sind hier zur Gewichtseinsparung mit Löchern versehen und ihre Vorderseiten sind mit weichelastischen Polstern 13 bestückt. Wirkt Druck von vorne auf die vorderen Querbänder 7, so werden die hier S-förmigen Verbindungsstege 9 leicht elastisch deformiert und aufgrund der Geometrie und ihrer Anordnung ergibt sich auch eine leichte Relativverschiebung der vorderen Querbänder 7 zu den hinteren Querbändern 8, wobei sich hierzu die hinteren Querbänder 8 je nach Wirkrichtung der resultierenden Kraft entweder etwas weiter strecken oder weiter gekrümmt werden und die vorderen Querbänder 7 sich mit ihren Enden nach vorne oder hinten krümmen. Insgesamt schmiegen sich die vorderen Querbänder 7 der Kontur des anlehnenden Rückens des Stuhlbenützers an. Durch die mit dem Anpressdruck induzierte Relativbewegung der vorderen Querbänder 7 in Richtung nach aussen oder innen wird die Rückenmuskulatur auch in dieser Richtung massiert, wenngleich nur ganz unterschwellig. Mit jedem erneuten Anlehnen an diese Rückenlehne verschiebt sich diese also leicht nach oben, und die quer abstehenden Querbänder 7 verschieben sich je nach dem leicht nach aussen oder innen. Insgesamt wird eine niederschwellige, ja unterschwellige, kaum wahrnehmbare aber dennoch sehr wirkungsvolle Massage der Rückenmuskulatur erzielt, die sich auf die restlichen Körperteile positiv auswirkt.

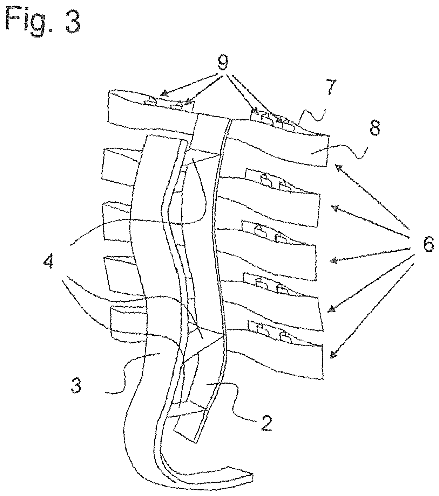

Die Figur 3 zeigt eine besonders vorteilhafte und auch konstruktiv einfache Ausführung. Das hintere Säulenband 3 ist stärker und steifer ausgeführt und über mindestens drei gelenkig eingebaute Verbindungsstege 4 mit dem vorderen, schwächer und biegsamer ausgeführten Säulenband 2 verbunden. An diesem vorderen Säulenband sind die abzweigenden phoronomischen Elemente 7 angebaut, die ihrerseits aus je einem vorderen Querband 7 und einem hinteren Querband 8 bestehen. Zwischen denselben sind mehrere S-förmige Verbindungsstege 9 eingebaut. Diese Rückenlehnenkonstruktion erweist sich als hochdynamisch und äusserst bequem für den anlehnenden Stuhlbenützer. Beim Anlehnen wirken alle Elemente in harmonischer Art zusammen und schmiegen sich unter Bewirkens von unterschwelligen Bewegungen an die Rückenmuskulatur an, wobei der Bereich unmittelbar hinter der Wirbelsäule des Benützers frei bleibt.

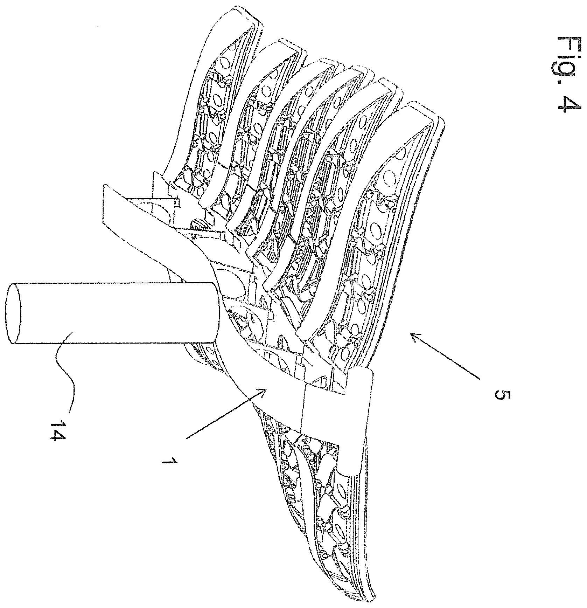

Der Einsatz von phoronomischen Elementen in gleicher oder ganz ähnlicher Weise wie für die Rückenlehne ist optional auch für die Sitzfläche 5 denkbar. In Figur 4 ist hierzu eine Ansicht einer solchen Sitzfläche von vorne unten und schräg nach oben gesehen dargestellt, mit der angedeuteten Stütze 14, wobei unten das Fahrgestell nicht dargestellt ist. In diesem Falle bewirken leichte Gewichtsverlagerungen der auf dieser Sitzfläche 5 sitzenden Person unweigerliche dynamische Reaktionen der Sitzfläche 5, indem sich diese verschiebt und leicht verzieht, sodass eine unterschwellige Bewegung induziert wird, welche der Blutzirkulation im Gesässbereich und in den Oberschenkeln förderlich ist. Die Oberschenkel liegen dabei in konkaven Schalen, die von den hier oberen Querbändern gebildet werden, auf welche die Oberschenkel zu liegen kommen, während das zentrale phoronomische Element 1 zwischen den Beinen längs derselben verläuft und für das Gesäss eine nach unten gebogene Delle bildet. Diese Konturen können durch Anpassung der Verbindungsstege und der Federkissen zwischen den Bändern individuell an das Profil einer Person angepasst werden.

2. Eine derartig konstruierte Rückenlehne lässt sich an unterschiedlichsten Stühlen oder Sitzen anwenden. Ein breites Anwendungsfeld sind Büro-, Arbeits- und Freizeitstühle, etwa solche, die zum Fernsehen eingesetzt werden. Aber auch an Sitzen für mobile Anwendungen in Fahrzeugen wie Privatautos, Lkw, Lieferwagen, Bussen, Taxis, aber auch in Schiffen, Bahnen und Flugzeugen und an jeglichen anderen Stühlen oder Sitzen, etwa an den Sitzen oder Stühlen in Kongress-Sälen oder Kinos und Theatern kann eine solche Rückenlehne im Grundsatz verbaut werden. Wo immer sie angewendet wird, steigert sie erheblich den Sitzkomfort und das Wohlbefinden, vor allem in jenen Fällen, wo lange Sitzperioden nötig oder gewünscht sind.

### Bezugszeichenliste

- 1: Phoronomisches Element für Rückenlehne
- 2: Vorderes Säulenband an 1
- 3: Hinteres Säulenband an 1
- 4: Verbindungsstege an 1
- 5: Sitzfläche
- 6: Querrippen
- 7: Vorderes Band des Querbandes
- 8: Hinteres Band des Querbandes
- 9: Verbindungsstege an 6
- 10: Luftkissen
- 11: Bolzenfassung
- 12: Bolzen
- 13: Weichelastische Polsterung
- 14: Stütze

## Patentansprüche

1. Rückenlehne für einen Stuhl oder Sitz zur Anregung von unterschwelligen Bewegungen in der Rückenmuskulatur, *wobei* die Rückenlehne aus einem zentralen phoronomischen Element (1) aus zwei Säulenbändern (2,3) besteht, die sich ab der Mitte des hinteren Endes der Sitzfläche (5) nach oben zu erstrecken bestimmt sind und hierzu am Stuhl oder Sitz befestigbar sind, und einer Anzahl beidseits wie Rippen ab dem zentralen phoronomischen Element (1) seitlich abstehender phoronomischer Elemente (6) aus je zwei Querbändern (7,8) zur Abstützung der Rückenmuskulatur der sitzenden Person durch die vorderen Querbänder (7) beidseits ihrer Wirbelsäule ***dadurch gekennzeichnet,* dass** die Rückenlehne aus einem zentralen phoronomischen Element (1), das sich ab der Mitte des hinteren Endes der Sitzfläche (5) nach oben zu erstrecken bestimmt ist, besteht, wobei es nach hinten mit einstellbarem Widerstand nachgiebig neigbar ausgeführt ist, und wobei sein vorderes Säulenband (2) dem Verlauf einer Wirbelsäule nachführbar biegbar ist, indem Verbindungsstege (4) zum hinteren Säulenband (3) längsveränderlich, oder gelenkig verstellbar oder ihre Anlenkung an den einander gegenüberliegenden Innenseiten der Säulenbänder (2,3) an den Säulenbändern (2,3) längsverschieblich ausgeführt sind, sodass diese den Abstand der Säulenbänder (2,3) in entspannter Lage definieren und bei lokalem Druck auf das vordere Säulenband (2) dieses sich in Form und Länge nach Massgabe der Anordnung und Ausgestaltung der Verbindungsstege (4) verändert, und wobei ab dem vorderen Säulenband (2) beidseits mehrere Querbänder (7) wie Rippen (6) zur Abstützung der Rückenpartien beidseits der Wirbelsäule der sitzenden Person angeformt sind, die über Verbindungsstege (9) je mit hinteren Querbändern (8) verbunden sind, die ihrerseits am vorderen (2) oder hinteren Säulenband (3) angeformt sind, und wobei auch diese Verbindungsstege (9) längsveränderlich, oder gelenkig verstellbar oder ihre Anlenkungen an den Querbändern (7,8) an denselben längsverschieblich ausgeführt sind, sodass diese Verbindungsstege (9) den Abstand der Querbänder (7,8) in entspannter Lage definieren und bei lokalem Druck auf die vorderen Querbänder (7) diese sich in Form und Länge nach Massgabe der Anordnung und Ausgestaltung der Verbindungsstege (9) verändern.

2. Rückenlehne nach Anspruch 1, ***dadurch gekennzeichnet,* dass** die Verbindungsstege (4) zwischen dem vorderen (2) und dem hinteren Säulenband (3) steife flächige Verbindungsstege (4) sind, die schiefwinklig zwischen dem vorderen Säulenband (2) und dem hinteren Säulenband (3) beidenends gelenkig über die Breite der Säulenbänder an denselben angelenkt sind, sodass ein Verschieben des vorderen Säulenbandes (2) gegen das hintere Säulenband (3) eine Relativ-Verschiebung derselben gegeneinander in Bandrichtung sowie Verformung bewirkt, und dass die Verbindungsstege (9) zwischen den Querbändern (7,8) elastisch biegsame, ein- oder mehrfach gekrümmte Verbindungsstege bilden, wobei diese Verbindungsstege beidenends gelenkig an der Innenseite der einander gegenüberliegenden Innenseiten der Querbänder (7,8) befestigt sind.

3. Rückenlehne nach Anspruch 1, ***dadurch gekennzeichnet,* dass** die Gelenkverbindung der Verbindungsstege (4,9) wenigstens an einer Befestigungsseite der Verbindungsstege gegenüber dem Säulenband (2,3) oder Querband (7,8) in Bandrichtung verschiebbar ausgeführt ist, wobei die Verschiebung mittels Bowdenzügen verstellbar ist.

4. Rückenlehne nach einem der Ansprüche 1 bis 3, ***dadurch gekennzeichnet,* dass** die Gelenkverbindungen der Verbindungsstege (4,9) mit den Säulenbändern (2,3) oder den Querbändern (7,8) als Klickverbindungen ausgeführt sind, mit je einer elastisch spreizbaren Bolzenfassung (11), in welche ein Bolzen (12) quer zu seiner Verlaufrichtung unter Spreizung der Bolzenfassung (11) einklickbar ist, sodass die Verbindungsstege (4,9) werkzeuglos austauschbar sind.

5. Rückenlehne nach Anspruch 4, ***dadurch gekennzeichnet,* dass** die Bolzenfassungen (11) an den Innenseiten der Säulenbänder (2,3) oder der Querbänder (7,8) in deren Bandrichtung verschiebbar angeordnet sind, und in jeder Verschiebeposition sicherbar sind.

6. Rückenlehne nach einem der vorangehenden Ansprüche, ***dadurch gekennzeichnet,* dass** das hintere Säulenband (3) mit seinem unteren, gekrümmten Ende gegen die Sitzfläche (5) hin unterhalb derselben mit dem Stuhl verbindbar ist, und ab der Verbindungsstelle von der Seite des Stuhls her gesehen eine Kurve zu formen bestimmt ist, welche der von der Seite gesehenen Kontur der äusseren Form von Gesäss und Rücken einer sitzenden Person nachempfunden ist, und wobei das vordere Säulenband (2) allein über die Verbindungsstege (4) zum hinteren Säulenband (3) gehalten ist.

7. Rückenlehne nach Anspruch 5, ***dadurch gekennzeichnet,* dass** zwischen mindestens zwei Verbindungstegen (4) zwischen dem vorderen Säulenband (2) und dem hinteren Säulenband (3) mindestens ein Luftkissen (10) als progressiv wirkende Druckfeder eingebaut ist, wobei das Luftkissen (10) mit einem Luftschlauch an eine Anschluss-Stelle führt, die mit einem Ventil ausgerüstet ist, sodass es mittels einer Pumpe mit einem individuell wählbaren Druck aufpumpbar ist und Luft über das Ventil ablassbar ist, zur individuellen Formgebung der Säulenbänder (2,3).

8. Rückenlehne nach Anspruch 5, ***dadurch gekennzeichnet,* dass** zwischen dem vorderen Säulenband (2) und dem hinteren Säulenband (3) mindestens eine Stahl-Druckfeder eingebaut ist.

9. Rückenlehne nach einem der vorangehenden Ansprüche, ***dadurch gekennzeichnet,* dass** die vorderen Querbänder (7) auf ihrer zur Zuwendung zur Sitzfläche (5) bestimmten Seite mit je einem Polster (13) aus weichelastischem Material bestückt sind.

10. Rückenlehne nach Anspruch 1, ***dadurch gekennzeichnet,* dass** einige oder alle der Verbindungsstege (4,9) einseitig oder beidseitig gelenkig, das heisst scharnierend an den Innenseiten der Bänder (2,3; 7,8) angelenkt sind, und die Scharnierachse der gelenkigen Anlenkungen an der Innenseite der Bänder (2,3; 7,8) in deren Längsrichtung verschiebbar angeordnet sind und in jeder Verschiebelage arretierbar sind.

11. Rückenlehne nach Anspruch 10, ***dadurch gekennzeichnet,* dass** die Scharnierachsen der gelenkigen Anlenkungen an der Innenseite der Bänder (2,3; 7,8) in deren Längsrichtung verschiebbar angeordnet sind, indem ein Bowdenzug mit ihnen verbunden ist, welcher in den Endbereichen der Bänder (2,3; 7,8) um eine dort angeordnete Umlenkrolle führt und über weitere Umlenkrollen zu einem arretierbaren Hebel, Verstellrad oder Drehgriff, sodass sie in jeder Verschiebelage arretierbar sind.

12. Rückenlehne nach Anspruch 1, ***dadurch gekennzeichnet,* dass** einige oder alle der Verbindungsstege (4,9) als Gasdruckfedern ausgeführt sind, die mit ihren Enden an den Innenseiten der sie verbindenden Bänder (2,3; 7,8) angelenkt sind.

13. Rückenlehne nach einem der vorangehenden Ansprüche, ***dadurch gekennzeichnet,* dass** die Zwischenräume zwischen den Bändern (2, 3; 7, 8) und ihren Verbindungsstegen (4, 9) von einem als Druckfeder wirkenden weichelastischen Material ausgefüllt sind.

14. Rückenlehne nach einem der vorangehenden Ansprüche, ***dadurch gekennzeichnet,* dass** sie als Sitzfläche ausgeführt ist, wobei die Säulenbänder (2, 3) mittig längs der Sitzfläche verlaufen und die Querbänder (7, 8) von oben gesehen konkav verlaufen, zur Aufnahme der Oberschenkel einer darauf sitzenden Person, und wobei die von den oberen Querbändern gebildete Sitzfläche und die von den vorderen Querbändern der Rückenlehne gebildete Rückenlehne je mit einem Überzugskissen überzogen sind, welches in mehrere Kompartimente unterteilt ist, die je mit einem Gel gefüllt sind.

## Claims

1. A backrest for a chair or seat to stimulate subtle movements in the back muscles, wherein the backrest consists of a central phoronomic element (1) of two column straps (2, 3), which are intended to extend upwards from the center of the rear end of the sitting surface (5), and which can be fastened to the chair or seat for this purpose, and of a number of phoronomic elements (6), which protrude laterally like ribs on both sides from the central phoronomic element (1), in each case of two transverse straps (7, 8) to support the back muscles of the sitting person by means of the front transverse straps (7) on both sides of the person's spine,
***characterized in* that** the backrest consists of a central phoronomic element (1), which extends upwards from the center of the rear end of the sitting surface (5), wherein it is embodied so as to be capable of being tilted backwards with adjustable resistance, and wherein its front column strap (2) can be bent so as to follow the course of a spine, **in that** connecting webs (4) are embodied so as to be longitudinally changeable to the rear column strap (3), or to be adjustable in an articulated manner or that their articulation on the opposite insides of the column straps (2, 3) on the column straps (2, 3) are embodied in a longitudinally displaceable manner, so that they define the distance of the column straps (2, 3) in relaxed position and said front column strap (2) changes in shape and length in accordance with the arrangement and embodiment of the connecting webs (4) in response to local pressure thereon, and wherein, starting at the front column strap (2) on both sides, a plurality of transverse strips (7), are integrally molded like ribs (6) on both sides of the spine of the sitting person to support the back sections, are in each case connected via webs (9) to rear transverse strips (8), which, in turn, are integrally molded on the front (2) or rear column strap (3), and wherein these connecting webs (9) are also embodied so as to be longitudinally changeable or adjustable in an articulated manner or that their articulations to the transverse strips (7, 8) thereon are embodied in a longitudinally displaceable manner, so that these webs (9) define the distance of the transverse strips (7, 8) in relaxed position and the front transverse straps (7) change in shape and length in accordance with the arrangement and embodiment of the connecting webs (9) in response to local pressure thereon.

2. The backrest according to claim 1, ***characterized in* that** the connecting webs (4) between the front (2) and the rear column strap (3) are stiff flat struts (4), which are articulated on the column straps in an oblique-angled manner between the front column strap (2) and the rear column strap (3) in an articulated manner on both ends across the width thereof, so that a displacement of the front column strap (2) against the rear column strap (3) effects a relative displacement thereof against one another in strap direction as well as deformation, and that the webs (9) between the transverse straps (7, 8) form elastically flexible webs, which are curved once or several times, wherein these webs are fastened in an articulated manner on both ends on the inside of the opposite insides of the transverse straps (7, 8).

3. The backrest according to claim 1, ***characterized in* that** the joint connection of the connecting webs (4, 9) is embodied in a displaceable manner in strap direction at least on one fastening side of the webs with respect to the column strap (2, 3) or transverse strap (7, 8), wherein the displacement can be adjusted by means of Bowden cables.

4. The backrest according to one of claims 1 to 3, ***characterized in* that** the joint connections of the connecting webs (4, 9) with the column straps (2, 3) or the transverse straps (7, 8) are embodied as click connections, in each case comprising an elastically spreadable bolt socket (11), into which a bolt (12) can be clicked transversely to its direction of travel by spreading the bolt socket (11), so that the connecting webs (4, 9) can be replaced without any tools.

5. The backrest according to claim 4, ***characterized in* that** the bolt sockets (11) are arranged on the insides of the column straps (2, 3) or the transverse straps (7, 8) so as to be capable of being displaced in the strap direction thereof, and can be secured in every displacement position.

6. The backrest according to one of the preceding claims, ***characterized in* that** the rear column strap (3) is connectable to the chair with its lower end, which is curved towards the sitting surface (5), below it, and starting at the connecting point viewed from the side of the chair, is defined to form a curve, which conforms to the contour of the outer shape of buttocks and back of a sitting person, viewed from the side, and wherein the front column strap (2) is held only via the connecting webs (4) to the rear column strap (3)

7. The backrest according to claim 5, ***characterized in* that** the at least one air cushion (10) is installed as progressively acting compression spring between at least two connecting webs (4) between the front column strap (2) and the rear column strap (3), wherein the air cushion (10) leads with an air tube to a connecting point, which is equipped with a valve, so that said air cushion (10) can be inflated by means of a pump with an individually selectable pressure and air can be released via the valve to individually shape the column straps (2, 3) .

8. The backrest according to claim 5, ***characterized in* that** at least one steel compression spring is installed between the front column strap (2) and the rear column strap (3).

9. The backrest according to one of the preceding claims, ***characterized in* that** on their side, which faces the sitting surface (5), the front transverse straps (7) are equipped with a pad (13) each of soft-elastic material.

10. The backrest according to claim 1, ***characterized in* that** some or all of the connecting webs (4, 9) are articulated to the insides of the straps (2, 3; 7, 8) on one side or on both sides in an articulated manner, i.e. in a hinged manner, and the hinge axis of the articulated articulations on the inside of the straps (2, 3; 7, 8) are arranged so as to be capable of being displaced in the longitudinal direction thereof and can be locked in each displacement position.

11. The backrest according to claim 10, ***characterized in* that** the hinge axes of the articulated articulations on the inside of the straps (2, 3; 7, 8) are arranged so as to be capable of being displaced in the longitudinal direction thereof, **in that** a Bowden cable is connected thereto, which, in the end area of the straps (2, 3; 7, 8), leads around a deflection roller arranged at that location and via further deflection rollers to a lockable lever, adjusting wheel or rotary handle, so that they can be locked in every displacement position.

12. The backrest according to claim 1, ***characterized in* that** some or all of the struts (4, 9) are embodied as gas pressure springs, which are articulated with their ends on the insides of the straps (2, 3; 7, 8), which connect them.

13. The backrest according to one of the preceding claims, ***characterized in* that** the spaces between the strips (2, 3; 7, 8) and their connecting webs (4, 9) are filled by a soft-elastic material, which acts as compression spring.

14. The backrest according to one of the preceding claims, ***characterized in* that** it is embodied as sitting surface, wherein the column straps (2, 3) run in the middle along the sitting surface and the transverse straps (7, 8) run concavely, seen from above, for accommodating the thighs of a person sitting thereon, and wherein the sitting surface, which is formed by the upper transverse straps, and the backrest, which is formed by the front transverse straps of the backrest, are in each case covered with a cover cushion, which is divided into a plurality of compartments, which are each filled with a gel.

## Revendications

1. Dossier pour une chaise ou à un siège, apte à stimuler des mouvements subliminaux dans les muscles du dos, le dossier étant composé d'un élément phoronomique central (1) constitué de deux bandes de colonne vertébrale (2, 3), qui sont destinées à s'étendre vers le haut, à partir du centre de l'extrémité arrière de l'assise (5) et qui sont susceptibles d'être fixées à cet effet sur la chaise ou sur le siège et d'un nombre d'éléments phoronomiques (6), débordant latéralement de part et d'autre, comme des nervures à partir de l'élément phoronomique central (1), faits chacun de deux bandes transversales (7, 8) pour soutenir les muscles du dos de la personne assise par les deux bandes transversales (7) antérieures, de part et d'autre de sa colonne vertébrale, **caractérisé en ce que** le dossier est composé d'un élément phoronomique central (1), qui est destiné à s'étendre vers le haut, à partir du centre de l'extrémité antérieure de l'assise (5), celui-ci étant réalisé en étant inclinable élastiquement vers l'arrière, en opposant une résistance réglable et sa bande de colonne vertébrale (2) antérieure étant flexible de sorte à suivre le trajet d'une colonne vertébrale, **en ce que** des barrettes de liaison (4) sur la bande de colonne vertébrale (3) postérieure sont variables en longueur ou réglables de manière articulée ou **en ce que** leur articulation sur les faces intérieures mutuellement opposées des bandes de colonne vertébrale (2, 3) est réalisée en étant déplaçable en longueur sur les bandes de colonne vertébrale (2, 3), de sorte que celles-ci définissent l'écart entre les bandes de colonne vertébrale (2, 3) en position détendue et dans le cas d'une pression locale exercée sur la bande de colonne vertébrale (2) antérieure, celle-ci varie en forme et en longueur selon le critère de la disposition et de la conception des barrettes de liaison (4) et à partir de la bande de colonne vertébrale (2) antérieure, de part et d'autre, plusieurs bandes transversales (7) telles que des nervures (6) étant surmoulées pour soutenir les parties dorsales de part et d'autre de la colonne vertébrale de la personne assise, qui par l'intermédiaire de barrettes de liaison (9) sont reliées chacune avec des bandes transversales (8) postérieures qui pour leur part sont surmoulées sur la bande de colonne vertébrale antérieure (2) ou postérieure (3) et également lesdites barrettes de liaison (9) étant variables en longueur ou réglables de manière articulée ou leurs articulations sur les bandes transversales (7, 8) étant réalisées en étant déplaçables en longueur sur celles-ci, de telle sorte que lesdites barrettes de liaison (9) définissent l'écart entre les bandes transversales (7, 8) en position détendue et qu'en cas d'une pression locale exercée sur des bandes transversales (7) antérieures, ces dernières varient en forme et en longueur selon le critère de la disposition et de la conception des barrettes de liaison (9).

2. Dossier selon la revendication 1, **caractérisé en ce que** les barrettes de liaison (4) entre la bande de colonne vertébrale antérieure (2) et postérieure (3) sont des barrettes de liaison (4) plates rigides, qui sont articulées à angle oblique entre la bande de colonne vertébrale (2) antérieure et la bande de colonne vertébrale (3) postérieure, de manière articulée par les deux extrémités sur la largeur des bandes de colonne vertébrale sur ces dernières, de telle sorte qu'un déplacement de la bande de colonne vertébrale (2) antérieure contre la bande de colonne vertébrale (3) postérieure provoque un déplacement relatif de ces dernières l'une contre l'autre dans la direction de la bande, ainsi qu'une déformation et **en ce que** les barrettes de liaison (9) entre les bandes transversales (7, 8) forment des barrettes de liaison élastiquement flexibles, une ou plusieurs fois recourbées, lesdites barrettes de liaison étant fixées par leurs deux extrémités de manière articulée sur la face intérieure des faces intérieures mutuellement opposées des bandes transversales (7, 8).

3. Dossier selon la revendication 1, **caractérisé en ce qu'**au moins sur un côté de fixation des barrettes de liaison, la liaison articulée des barrettes de liaison (4, 9) est réalisée en étant déplaçable dans la direction de la bande, par rapport à la bande de colonne vertébrale (2, 3) ou à la bande transversale (7, 8), le déplacement étant réglable à l'aide de câbles Bowden.

4. Dossier selon l'une quelconque des revendications 1 à 3, **caractérisé en ce que** les liaisons articulées des barrettes de liaison (4, 9) avec les bandes de colonne vertébrale (2, 3) ou les bandes transversales (7, 8) sont réalisées sous la forme de liaisons par encliquetage, pourvues chacune d'un support de boulon (11) élastiquement expansible, dans lequel un boulon (12) est encliquetable à la transversale de sa direction d'extension, sous expansion du support de boulon (11), de sorte que les barrettes de liaison (4, 9) soient interchangeables sans outil.

5. Dossier selon la revendication 4, **caractérisé en ce que** les supports de boulon (11) sont placés en étant déplaçables dans la direction de leurs bandes sur les faces intérieures des bandes de colonne vertébrale (2, 3) ou des bandes transversales (7, 8) et sont susceptibles d'être bloqués dans chaque position de déplacement.

6. Dossier selon l'une quelconque des revendications précédentes, **caractérisé en ce que** par son extrémité inférieure recourbée, la bande de colonne vertébrale (3) postérieure est susceptible d'être reliée avec la chaise en direction de l'assise (5), en-dessous de cette dernière et **en ce qu'**après le point de liaison, vue à partir du côté de la chaise, est destinée à former une courbe qui imite la forme du fessier et du dos d'une personne assise et la bande de colonne vertébrale (2) antérieure étant maintenue uniquement par l'intermédiaire des barrettes de liaison (4) par rapport à la bande de colonne vertébrale (3) postérieure.

7. Dossier selon la revendication 5, **caractérisé en ce qu'**entre au moins deux barrettes de liaison (4) entre la bande de colonne vertébrale (2) antérieure et la bande de colonne vertébrale (3) postérieure est encastré au moins un coussin d'air (10) faisant office de ressort de pression à action progressive, le coussin d'air (10) menant par un flexible à air sur une zone de raccordement qui est équipée d'une soupape, de telle sorte qu'à l'aide d'une pompe, il puisse être gonflé de la valeur d'une pression individuellement sélectionnable et que de l'air puisse être évacué par l'intermédiaire de la soupape, pour donner une forme individuelle aux bandes de colonne vertébrale (2, 3)

8. Dossier selon la revendication 5, **caractérisé en ce qu'**entre la bande de colonne vertébrale (2) antérieure et la bande de colonne vertébrale (3) postérieure est encastré au moins un ressort de pression en acier.

9. Dossier selon l'une quelconque des revendications précédentes, **caractérisé en ce que** sur leur face destinée à être dirigée vers l'assise (5), les bandes transversales (7) antérieures sont équipées chacune d'un rembourrage (13) en matière élastique souple.

10. Dossier selon la revendication 1, **caractérisé en ce que** certaines ou toutes les barrettes de liaison (4, 9) sont articulées de manière articulée d'un côté ou des deux côtés, c'est-à-dire en formant charnière sur les faces intérieures des bandes (2, 3; 7, 8), et **en ce que** les axes de charnière des articulations articulées sur la face intérieure des bandes (2, 3; 7, 8) sont placés en étant déplaçables dans la direction longitudinale de celles-ci et en étant susceptibles d'être bloqués dans chaque position de déplacement.

11. Dossier selon la revendication 10, **caractérisé en ce que** les axes de charnière des articulations articulées sur la face intérieure des bandes (2, 3; 7, 8) sont placés en étant déplaçables dans la direction longitudinale de celles-ci, **en ce qu'**ils sont reliés avec un câble Bowden, qui dans les zones d'extrémités des bandes (2, 3 ; 7, 8) est guidé autour d'une poulie de renvoi qui y est placée et par l'intermédiaire de poulies de renvoi supplémentaires donnant sur un levier, une molette de réglage ou une poignée rotative susceptible d'être bloqué(e), de sorte qu'ils soient susceptibles d'être bloqués dans chaque position de déplacement.

12. Dossier selon la revendication 1, **caractérisé en ce que** certaines ou toutes les barrettes de liaison (4, 9) sont réalisées sous la forme de ressorts de pression à gaz qui par leurs extrémités sont articulés sur les faces intérieures des bandes (2, 3 ; 7, 8) qui les relient.

13. Dossier selon l'une quelconque des revendications précédentes, **caractérisé en ce que** les espaces intermédiaires entre les bandes (2, 3 ; 7, 8) et leurs barrettes de liaison (4, 9) sont remplis d'une matière élastique souple faisant office de ressort de pression.

14. Dossier selon l'une quelconque des revendications précédentes, **caractérisé en ce qu'**il est réalisé sous la forme d'une assise, les bandes de colonne vertébrale (2, 3) s'écoulant au centre, le long de l'assise et vues par le dessus, les bandes transversales (7, 8) s'écoulant sous forme concave, pour recevoir la cuisse d'une personne qui y est assise et l'assise formée par les bandes transversales supérieures, ainsi que le dossier formé par les bandes transversales antérieures étant revêtus chacun d'un coussin housse qui est divisé en plusieurs compartiments qui sont remplis chacun d'un gel.
